# EUROPÄISCHE PATENTSCHRIFT

(11) **EP 2 909 293 B1**
(45) Veröffentlichungstag und Bekanntmachung des Hinweises auf die Patenterteilung: **09.11.2016**
(21) Anmeldenummer: 13795405.3
(22) Anmeldetag: 16.10.2013
(51) Int. Cl.: C11B 13/00

(54) **VORRICHTUNG ZUR SAMMLUNG VON FLÜSSIGEM ALTSPEISEÖL**
DEVICE FOR COLLECTING LIQUID USED COOKING OIL
DISPOSITIF DE COLLECTE D'HUILE ALIMENTAIRE USAGÉE LIQUIDE

(30) Priorität: 17.10.2012 AT 4052012
(43) Veröffentlichungstag der Anmeldung: 26.08.2015
(73) Patentinhaber: Golden Faith Handels & Beteiligungs KG, 1160 Wien (AT)
(72) Erfinder: EIBEL, Günther, A-1160 Wien (AT)
(74) Vertreter: Fox, Tobias
(86) Internationale Anmeldenummer: PCT/AT2013/000173
(87) Internationale Veröffentlichungsnummer: WO 2014/059456

(56) Entgegenhaltungen:
- DE-C- 434 251
- JP-A- H06 299 837
- JP-A- 2009 062 847
- JP-A- 2011 225 795
- KR-A- 20120 083 058
- US-A- 421 754

## Beschreibung

Die Erfindung betrifft eine Vorrichtung zur Sammlung von flüssigem Altspeiseöl mit einem Trichter und einem Faß.

Seit einiger Zeit ist es bekannt, daß Altspeiseöl ein wertvoller Rohstoff ist (z.B. JP 2011225795), aus dem nach Reinigungs- und Umwandlungsprozessen neue Öle, Fette oder auch Biotreibstoffe gewonnen werden können. In großen Mengen fallen Altspeiseöle in Restaurantbetrieben und in der Nahrungsmittelindustrie an. Mit verhältnismäßig einfachen Mitteln lohnt es sich, an den entsprechenden Stellen Fässer aufzustellen, in die vom Gastwirtschaftspersonal beispielsweise Friteusenbehälter entleert werden. Zur Nutzung des Altspeiseöls werden diese Fässer dann in regelmäßigen Abständen von den Betrieben eingesammelt und durch neue leere Fässer ersetzt. Dieses Verfahren mit den technisch bekannten Mitteln der Fässer und gegebenenfalls unter Einsatz von Trichtern zum leichteren Befüllen der Fässer ist nur an Orten praktikabel, an denen eine große Menge einheitlichen Altspeiseöls anfällt, das überdies von geschultem Fachpersonal gehandhabt wird. Die Menge an in privaten Haushalten anfallendem Altspeiseöl ist zwar auch sehr hoch, doch ist es ökonomisch nicht sinnvoll, die in jedem einzelnen Haushalt kleinen Mengen einzeln einzusammeln und für jede Abgabe einzelne Rechnungen zu erstellen.

Ziel der Erfindung ist es, eine Vorrichtung zu schaffen, mit welcher Altspeiseöl in Mengen, die in Privathaushalten anfallen, auf einfache Weise gesammelt werden kann, d.h. die einfach bedient werden kann, mit wenig Personalaufwand betreut und gewartet werden muß, wenig Reinigung bedarf, sicher vor fehlerhafter oder betrügerischer Bedienung ist und schließlich eine einfache und schnelle Abrechnung mit den Privatkunden ermöglicht.

Die erfindungsgemäße Vorrichtung erreicht dies dadurch, daß zwischen Trichter und Faß ein Sammelbehälter angeordnet ist, der eine Waagzelle und einen Füllstandsmesser aufweist, deren Daten von einer elektronischen Steuerung erfaßbar sind, wobei der Sammelbehälter stromabwärts ein Ventil aufweist, das durch die elektronische Steuerung öffenbar ist.

In einer bevorzugten Ausführungsform weist der Trichter eine Heizung und stromabwärts ein Ventil zum Öffnen und Schließen seines Trichterausganges auf.

Zur weiteren Ausgestaltung der Erfindung weist die Vorrichtung ein Ausgabemittel, wie z.B. einen Barcodedrucker, zur Anzeige einer eingefüllten Ölmenge auf.

Bevorzugt ist in einer Ausgestaltung der Erfindung, daß der Trichter am Trichterausgang ein Sieb zum Zurückhalten von im wesentlichen feststoffförmigen Partikeln aufweist.

Ein bevorzugte Ausführungsform der Vorrichtung zeichnet sich dadurch aus, daß das Sieb einen Schieber zum Abstreifen von Partikeln auf dem Sieb sowie einen Behälter zum Auffangen der durch den Schieber abgestreiften Partikel aufweist.

In einer Ausführungsform der Erfindung weist die Vorrichtung ein weiteres Faß sowie ein dem Sammelbehälter stromabwärts nachgeschaltetes Ventil zum Wechseln des Ölflusses zwischen den beiden Fässern auf.

Zur weiteren Ausgestaltung der Erfindung weist die Vorrichtung einen elektronischen Speicher für die Daten der Waagzelle und des Füllstandsmessers sowie einen elektronischen Sender zum Übertragen von Information über den Betrieb der Vorrichtung auf.

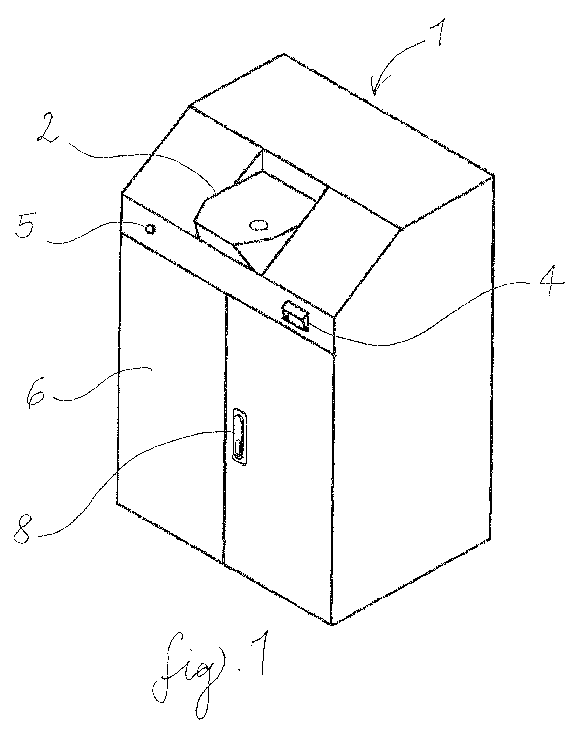

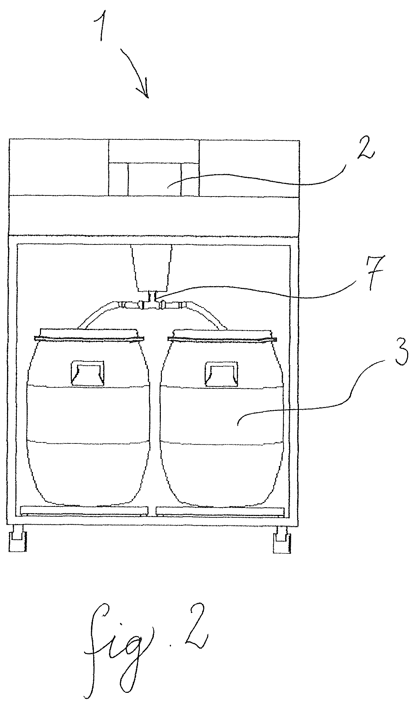

Die Erfindung wird nachstehend anhand eines in den Zeichnungen dargestellten Ausführungsbeispieles näher erläutert. Es zeigen: Fig. 1 eine schematische Schrägansicht der Vorrichtung und Fig. 2 eine schematische Vorderansicht der Vorrichtung mit geöffneten Türen.

Die Vorrichtung 1 soll gemäß Fig. 1 für Privatkunden ohne Schulung und ohne Vorkenntnisse einfach bedienbar sein. Sie weist äußerlich daher nur einen Trichter 2, einen Knopf 5 und einen Ausgabeschacht 4 für z.B. einen Wertgutschein auf. Die Vorrichtung 1 zur Sammlung von Altspeiseöl kann zum Beispiel in den Räumen eines Supermarktes aufgestellt werden. Dies nutzt die Gewohnheit der Kunden aus, Pfandgut oder besondere Sondermüllformen, wie Altbatterien oder ähnliches, beim täglichen Einkauf in den Supermarkt mitzuführen und dort abzugeben. Bei der erfindungsgemäßen Vorrichtung 1 können die Kunden nun also auch das in ihrem Haushalt anfallende Altspeiseöl mitbringen, in den Trichter 2 einfüllen und einen Wertgutschein in Form eines Bons erhalten. Dazu wird nach Einfüllen des Altspeiseöls in den Trichter 2 der Knopf 5 betätigt. Nach Art der Abgabe von Pfandflaschen wird dann der Geldwert auf einem Bon ausgedruckt, den der Kunde für die individuelle Menge an abgegebenem Altspeiseöl erhält. Der Bon ist dann an der Supermarktkasse einlösbar.

Es kann gegebenenfalls nützlich sein, die Vorrichtung 1 mit einer optischen Anzeige über z.B. den Betriebszustand und die Menge/den Wert des abgegebenen Öls auszustatten. Ferner kann die Vorrichtung 1 einen Lautsprecher zur Abgabe von Warntönen o.ä. aufweisen.

Zum Zwecke der Bedienungsfreundlichkeit ist der Trichter 2 auf einer Höhe von etwa 90 bis 120 cm angeordnet. Außer dem Knopf 5 und dem Ausgabeschacht 4 weist die Vorrichtung 1 keine für den Kunden besondere Merkmale auf, die ihn bei der einfachen und schnellen Abgabe des Altspeiseöls irritieren oder stören könnten. Innerhalb der Vorrichtung 1 fließt das Altspeiseöl in einen Sammelbehälter (nicht gezeigt). Dieser ist mit einer Waagzelle und einem Füllstandsmesser ausgestattet, die das Gewicht der abgegebenen Menge des Öls sowie sein Volumen messen. Beide Meßwerte zusammen erlauben nicht nur die Messung der Ölmenge, sondern auch die Bestimmung eines allfällig enthaltenen Wasseranteiles in der abgegebenen Menge der Flüssigkeit. Wasser oder wäßrige Flüssigkeiten können dem Öl durch Verunreinigung oder durch ein fehlerhaftes Befüllen der Vorrichtung 1 beigemischt sein. Da ein allfälliger Wasseranteil keinen ökonomischen Wert besitzt, ist er aus der gesamten Abgabemenge herauszurechnen. Über die unterschiedliche Dichte von Wasser und Öl (Wasser = 1; Öl = 0,9) kann der Anteil bzw. das Verhältnis von Wasser und Öl ermittelt werden. Dem Kunden kommt anschließend nur für die Abgabe des Öls eine Renumera-tion zu. Mit anderen Worten dient nur der tatsächliche Anteil an Altspeiseöl an der Gesamtmenge als Basis für die Verrechnung. Auf diese Weise ist überraschend das Problem gelöst, mit der Abgabe von Wasser oder wasserhaltigen Ölen durch anonyme Kunden umzugehen. Die Vorrichtung 1 bedarf keiner weiteren Kontrollmittel.

Nach der Berechnung öffnet eine elektronische Steuerung ein dem Sammelbehälter stromabwärts angeordnetes Ventil, und die abgegebene Menge an Flüssigkeit strömt in ein Faß 3. Das Faß 3 ist so dimensioniert, daß möglichst viele einzeln abgegebene Kleinmengen an Altspeiseöl gesammelt werden können, daß es aber gleichzeitig in vollem Zustand durch eine Person noch abtransportiert werden kann. Die Größe des entsprechenden Fasses 3 beträgt daher ca. 50 Liter, wobei andere Behältertypen und andere Behältergrößen auch möglich sind. Das Faß 3 ist innerhalb der Vorrichtung 1 hinter Türen 6 aufgestellt. Die Türen 6 können auf herkömmliche Weise mittels eines Griffes 8 geöffnet werden.

Fig. 2 zeigt die Vorrichtung 1 in Vorderansicht mit geöffneten bzw. entfernten Türen. In dieser Ausführungsform befinden sich zwei Fässer 3 im unteren Bereich der Vorrichtung 1. Dies hat den Vorteil, daß auch dann Altspeiseöl gesammelt werden kann, wenn bereits ein Faß 3 voll ist. Die elektronische Steuerung betätigt in diesem Fall ein Ventil 7 und beendet das Befüllen des ersten vollen Fasses 3 und beginnt mit dem Befüllen des zweiten noch leeren Fasses 3. Das volle Faß 3 kann dann innerhalb eines Zeitraumes entnommen werden, in welchem die Vorrichtung 1 weiterhin betriebsfähig ist und weitere Altspeiseölmengen aufnehmen kann. Eine Trennung von Öl und Wasser erfolgt nicht in der Vorrichtung 1 und erfordert daher auch keine weiteren Mittel zum Trennen von Öl und Wasser und zum getrennten Aufbewahren in verschiedenen Behältern. Statt dessen erfolgt die Wasserabscheidung kostengünstiger beim Weiterverarbeiten der wesentlich größeren Mengen von gesammeltem Altspeiseöl an anderer Stelle. Der Kunde und der Supermarkt sind davon unbehelligt.

Der Trichter 2 besteht aus Gründen der einfachen Reinigung und der Beständigkeit beispielsweise aus Edelstahl. In einer Ausführungsform ist er beispielsweise durch eine elektrische Heizung beheizbar. Dadurch kann sichergestellt werden, daß das Öl unabhängig von den Jahreszeiten und anderen klimatischen Bedingungen rund um die Vorrichtung 1 auf ca. 20 °C aufgeheizt bzw. gehalten wird und somit genauere Ergebnisse bei der nachfolgenden Messung der Dichte des Öls bzw. des Öl-Wasser-Gemisches gewährleistet werden. Die elektronische Steuerung innerhalb der Vorrichtung 1 öffnet ein Ventil (nicht gezeigt) am Trichterausgang erst, wenn die abgegebene Ölmenge etwa 20 °C erreicht hat. Erst dann strömt das Öl in den Sammelbehälter zum Messen seiner konkreten Dichte.

Zudem fließt das Öl durch ein Sieb (nicht gezeigt) in den Sammelbehälter, wodurch im Altöl allfällig enthaltene feststoffartige Partikel und Rückstände zurückgehalten werden. Auch dies erhöht die Meßgenauigkeit. Um das Sieb seinerseits nicht mehrmals reinigen zu müssen und dadurch den Personalaufwand zum Betrieb der Vorrichtung 1 zu erhöhen, kann ein mechanischer Schieber unterhalb des Trichters 2 und über dem Sieb installiert sein, der je nach Bedarf oder in feststehenden regelmäßigen Abständen über das Sieb streicht und somit die zurückgehaltenen Partikel und Festkörper entfernt. Diese sind dann in einem Behälter aufzufangen.

Die Heizung des Trichters 2, das Ventil am Trichter 2, das Ventil 7, die Waagzelle, der Füllstandsmesser und der Barcodedrucker sind elektronisch gesteuert. Die elektronische Steuerung kann einen Computer umfassen, d.h. einen Prozessor, ein digitales Speichermedium, ein auf dem Speichermedium installiertes Programm sowie Schnittstellen zur Eingabe und Ausgabe von Daten.

Die entsprechenden Daten werden ebenfalls gespeichert. So kann die Vorrichtung 1 ein Signal abgeben, durch das eine externe Stelle erfährt, ob das Faß 3 oder eines der Fässer 3 voll ist. Ebenso sind weitere Informationen, wie etwa die Häufigkeit der Betätigung der erfindungsgemäßen Vorrichtung 1, die gesammelte Gesamtmenge des Altspeiseöls sowie die einzeln ausgezahlten Geldbeträge und der an die Kunden ausbezahlte Gesamtbetrag erfaßbar und per Kabel oder Funk oder mit einem anderen elektronischen Mittel an eine externe Stelle übertragbar. Gleiches gilt für Störungsmeldungen.

## Patentansprüche

1. Vorrichtung zur Sammlung von flüssigem Altspeiseöl mit einem Trichter (2) und einem Faß (3), **dadurch gekennzeichnet, daß** zwischen Trichter (2) und Faß (3) ein Sammelbehälter angeordnet ist, der eine Waagzelle und einen Füllstandsmesser aufweist, deren Daten von einer elektronischen Steuerung erfaßbar sind, wobei der Sammelbehälter stromabwärts ein Ventil (7) aufweist, das durch die elektronische Steuerung öffenbar ist.

2. Vorrichtung nach Anspruch 1, **dadurch gekennzeichnet, daß** der Trichter (2) eine Heizung und stromabwärts ein Ventil zum Öffnen und Schließen eines Trichterausganges aufweist.

3. Vorrichtung nach Anspruch 1 oder 2, **dadurch gekennzeichnet, daß** die Vorrichtung (1) ein Ausgabemittel, wie z.B. einen Barcodedrucker, zur Anzeige einer eingefüllten Ölmenge aufweist.

4. Vorrichtung nach einem der vorangegangenen Ansprüche, **dadurch gekennzeichnet, daß** der Trichter (2) am Trichterausgang ein Sieb zum Zurückhalten von im wesentlichen feststoffförmigen Partikeln aufweist.

5. Vorrichtung nach Anspruch 4, **dadurch gekennzeichnet, daß** das Sieb einen Schieber zum Abstreifen von Partikeln auf dem Sieb sowie einen Behälter zum Auffangen der durch den Schieber abgestreiften Partikel aufweist.

6. Vorrichtung nach einem der vorangegangenen Ansprüche, **dadurch gekennzeichnet, daß** die Vorrichtung (1) ein weiteres Faß (3) sowie ein dem Sammelbehälter stromabwärts nachgeschaltetes Ventil (7) zum Wechseln des Ölflusses zwischen den beiden Fässern (3) aufweist.

7. Vorrichtung nach einem der vorangegangenen Ansprüche, **dadurch gekennzeichnet, daß** die Vorrichtung (1) einen elektronischen Speicher für die Daten der Waagzelle und des Füllstandsmessers sowie einen elektronischen Sender zum Übertragen von Information über den Betrieb der Vorrichtung (1) aufweist.

## Claims

1. Device for collecting liquid used cooking oil, having a funnel (2) and a barrel (3), **characterized in that** between funnel (2) and barrel (3) there is arranged a collecting container, which has a load cell and a level meter, the data from which can be acquired by an electronic control system, wherein the collecting container has a valve (7), which can be opened by the electronic control system, downstream of the collecting container.

2. Device according to Claim 1, **characterized in that** the funnel (2) has a heater and, downstream, a valve for opening and closing a funnel outlet.

3. Device according to Claim 1 or 2, **characterized in that** the device (1) has an output means, such as a barcode printer, for the display of a quantity of oil that has been put in.

4. Device according to one of the preceding claims, **characterized in that** the funnel (2) has a screen at the funnel outlet in order to retain substantially solids-like particles.

5. Device according to Claim 4, **characterized in that** the screen has a slider for sweeping off particles on the screen and also a container for collecting the particles swept off by the slider.

6. Device according to one of the preceding claims, **characterized in that** the device (1) has a further barrel (3) and a valve (7) connected downstream of the collecting container for changing the flow of oil between the two barrels (3).

7. Device according to one of the preceding claims, **characterized in that** the device (1) has an electronic memory for the data from the load cell and the level meter, and also an electronic transmitter for transmitting information about the operation of the device (1).

## Revendications

1. Dispositif pour collecter des huiles alimentaires usagées liquides comprenant un entonnoir (2) et une cuve (3), **caractérisé en ce qu'**est disposé, entre l'entonnoir (2) et la cuve (3), un récipient collecteur, qui présente une cellule de pesage et un appareil de mesure de niveau de remplissage, dont les données peuvent être détectées par une commande électronique, dans lequel le récipient collecteur présente en aval une soupape (7), qui peut être ouverte par la commande électronique.

2. Dispositif selon la revendication 1, **caractérisé en ce que** l'entonnoir (2) présente un chauffage et, en aval, une soupape pour ouvrir et fermer une sortie d'entonnoir.

3. Dispositif selon la revendication 1 ou 2, **caractérisé en ce que** le dispositif (1) présente un moyen de sortie, tel qu'une imprimante de codes à barres, pour indiquer une quantité d'huile transvasée.

4. Dispositif selon l'une quelconque des revendications précédentes, **caractérisé en ce que** l'entonnoir (2) présente au niveau de la sortie de l'entonnoir un tamis pour retenir des particules sous forme sensiblement de substances solides.

5. Dispositif selon la revendication 4, **caractérisé en ce que** le tamis présente un coulisseau pour racler des particules sur le tamis ainsi qu'un récipient pour recueillir les particules raclées par le coulisseau.

6. Dispositif selon l'une quelconque des revendications précédentes, **caractérisé en ce que** le dispositif (1) présente une autre cuve (3) ainsi qu'une soupape (7) disposée en aval du récipient collecteur pour échanger le flux d'huile entre les deux cuves (3).

7. Dispositif selon l'une quelconque des revendications précédentes, **caractérisé en ce que** le dispositif (1) présente une mémoire électronique pour les données de la cellule de pesage et de l'appareil de mesure de niveau de remplissage ainsi qu'un émetteur électronique pour transmettre des informations concernant le fonctionnement du dispositif (1).
